Europäisches Patentamt

European Patent Office

Office européen des brevets

(19)

(11) Veröffentlichungsnummer: **0 224 694**
**B1**

(12)

# EUROPÄISCHE PATENTSCHRIFT

(45) Veröffentlichungstag der Patentschrift:
16.05.90

(51) Int. Cl.⁵: **H02K 15/12**

(21) Anmeldenummer: 86114403.8

(22) Anmeldetag: 17.10.86

(54) Verfahren zur Herstellung der Wicklung einer elektrischen Maschine.

(30) Priorität: 25.11.85  CH 5028/85

(43) Veröffentlichungstag der Anmeldung:
10.06.87 Patentblatt 87/24

(45) Bekanntmachung des Hinweises auf die Patenterteilung:
16.05.90 Patentblatt 90/20

(84) Benannte Vertragsstaaten:
AT CH DE ES FR GB IT LI SE

(56) Entgegenhaltungen:
CH-A- 464 331
US-A- 2 561 982

(73) Patentinhaber: BBC Brown Boveri AG, Haselstrasse,
CH-5401 Baden(CH)

(72) Erfinder: Herzog, Kurt, Mühleackerstrasse 12,
CH-8952 Schlieren(CH)
Erfinder: Schuler, Roland, Aehrenweg 7,
CH-5430 Wettingen(CH)

## Beschreibung

Die Erfindung bezieht sich auf ein Verfahren zur Herstellung der Wicklung einer elektrischen Maschine im Ganztränkverfahren gemäss dem Oberbegriff des Patentanspruchs 1.

Herstellungsverfahren dieser Art sind z.B. aus dem von H. Sequenz herausgegebenen Buch "Herstellung der Wicklungen elektrischer Maschinen" Springer Verlag Wien-New York 1973, S. 153, aus der Publikation "Micadur-Compact Kunstharz-Isolierung für mittlere Hochspannungsmaschinen" der BBC Aktiengesellschaft Brown, Boveri Cie., Baden (Schweiz) - No. 3889, oder auch der DE-PS 25 38 702 bekannt.

Bei diesem Verfahren werden die aus mehreren isolierten Drähten (Windungen) aufgebauten Spulen bzw. Stäben in die richtige Form gebracht, in ihrem Nutteil verklebt und mit einem kombinierten Glasseide-Feinglimmer-Band, der Hauptisolation, fortlaufend auf der ganzen Länge mehrfach umwickelt. Dank der Verwendung des gleichen Bandes für die ganze Spulenlänge entsteht eine gleichmässige Spulenisolation. Die fertigen Spulen werden unimprägniert (trocken), wenn nötig mit einem Glimmschutzbelag versehen, in das Eisenpaket eingelegt, zusammengeschaltet und die Nuten mit Keilen verschlossen.

Die Wickelkopfabstützung ist mit einer endlosen, saugfähigen Glasfaserbandage ausgeführt. Durch Trocknen wird der Wicklung die letzte Feuchtigkeit entzogen und dann das ganze Eisenpaket mit Wicklung in ein Imprägniergefäss eingesetzt und nach einem Vakuumprozess mit einem Epoxidharz imprägniert. Eine abschliessende Druckbehandlung unterstützt das Eindringen des Harzes in alle Isolationsteile und Abstützelemente. Dann schliesst sich eine Aushärteperiode bei erhöhter Temperatur an.

Die nach dem oben beschriebenen Verfahren hergestellten Wicklungen zeichnen sich insbesondere durch folgende Eigenschaften aus: Hohe mechanische Festigkeit, gleichmässige Spannungsfestigkeit und gute dielektrische Eigenschaften, hohe thermische Belastbarkeit, Unempfindlichkeit gegenüber Feuchtigkeit, Oel, sonstigen Verunreinigungen, Einwirkung radioaktiver Strahlung und hohe Betriebssicherheit.

Es hat sich nun gezeigt, dass die dielektrischen und mechanischen Eigenschaften der Wicklungsisolation noch wesentlich verbessert werden können, was vor allem beim Uebergang zu höheren Maschinenspannungen (ca. 6 kV und mehr) und grösseren Maschinenlängen (ca. 1 m und mehr) im Hinblick auf das Langzeitverhalten der Wicklungsisolation von entscheidender Bedeutung ist: Aus verfahrenstechnischen Gründen wird beim Ganztränkverfahren die Isolation praktisch ohne zusätzliche Pressung ausgehärtet. Die durch den Aufbau der Wicklungen aus isolierten Teilleiterbündeln, Zwischenlagen und Nutverschlusskeilen in den Statornuten bedingten Hohlräume zwischen Hauptisolation, Zwischenlagen und Nutwand werden zwar während des Imprägniervorganges mit Imprägniermittel ausgefüllt, bei der Aushärtung entstehen jedoch durch teilweises Ausfliessen und Aushärtungsschwund des Imprägniermittels im allgemeinen nicht vermeidbare, wenn auch vergleichsweise kleine Hohlräume. Diese sind z.T. auch durch die unterschiedlichen Wärmedehnungen, insbesondere des Kupferleiters, begründet. Dadurch kann z.B. ein feines Spiel zwischen begrenzender Nutwand und isolierter Leiteroberfläche entstehen. Aehnliche Effekte können auch in der ersten Betriebszeit infolge der thermischen Beanspruchung auftreten.

Um die genannten Unzulänglichkeiten zu vermeiden, ist bereits vorgeschlagen worden, alle für den Einbau notwendigen Einbauspiele durch geeignete Massnahmen auszufüllen.

Bei Maschinen mit höheren Maschinenleistungen erhöhen sich die anregenden, in den Leitern wirkenden Stromkräfte, so dass die Leiter bei Vorhandensein von Spalten mit doppelter Netzfrequenz vibrieren können. Die Folge ist eine mechanische Zerstörung der Hauptisolierung, was schlussendlich zum Ausfall der Maschine führen kann.

Gemäss der Erfindung wird die nachteilige Spaltbildung dadurch vermieden, dass mindestens zwei vollständige Imprägnier- und Aushärteprozesse aufeinanderfolgend durchgeführt werden, wobei jede weitere Aushärtung auf einem tieferen Temperaturniveau, vorzugsweise ca. 20 °C tiefer, beginnend etwa bei Klassentemperatur des Isoliersystems, und die Aushärtung bei horizontaler Statorachse erfolgt, und dass vor jedem weiteren Prozess der Stator um mindestens 90°, höchstens jedoch um 180° gedreht wird.

Bei der Herstellung von Rotorwicklungen für elektrische Maschinen wird in der US-PS 2 648 018 vorgeschlagen, die Aushärtung des mit Tränkharz überfluteten Rotors zunächst zwei Stunden bei 60 °C, zwei weitere Stunden bei 80 °C und schliesslich acht Stunden bei 100 °C durchzuführen, also im Gegensatz zum Erfindungsgegenstand das Temperaturniveau sukzessive zu erhöhen. Damit lässt sich die Spaltbildung aber nicht vermeiden.

Die Erfindung wird nachstehend anhand einer aus Roebelstäben bestehenden Statorwicklung beispielsweise näher erläutert.

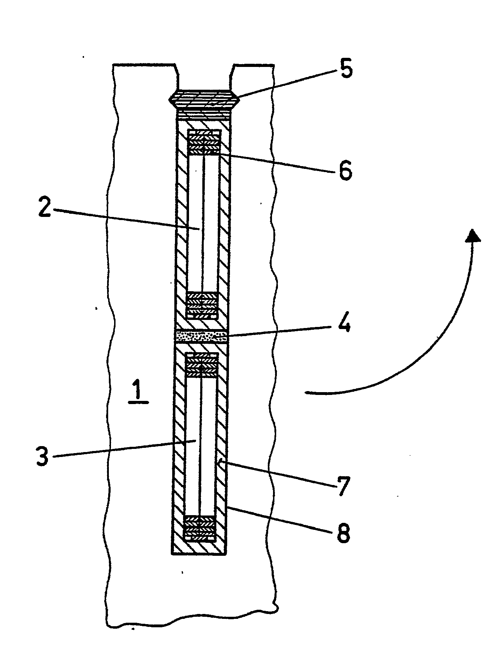

In der einzigen Zeichnung ist ein Querschnitt durch einen Wicklungsstab und den an ihn angrenzenden Statorblechkörper ausschnittsweise und vereinfacht dargestellt. In einer Nut im Statorblechkörper 1 liegen übereinander zwei Statorwicklungsstäbe 2, 3. Zwischen den beiden Stäben ist eine Zwischenlage 4 aus Isoliermaterial, z.B. glasfaserverstärktem Kunststoff, angeordnet. Ein Nutkeil 5 aus dem gleichen Material verschliesst die Nut und dient zur Festlegung der Stäbe 2 und 3 in der Nut. Die Stäbe sind in herkömmlicher Weise aufgebaut. Sie bestehen aus Teilleitern 6 mit einer (nicht dargestellten) Teilleiterisolation, die in bekannter Weise nach dem Roebelprinzip verdrillt sind. Jeder Stab 2, 3 ist von einer Hauptisolation 7 umgeben, die an ihrer äusseren Oberfläche 8 mit einem für Tränkharz durchlässigen Glimmschutzbelag (nicht dargestellt) versehen ist.

Entsprechend dem bekannten Ganztränkverfahren (z.B. nach der eingangs genannten Firmenschrift "Micadur-Compact ..." werden die Stäbe fertig isoliert im trockenen Zustand in die Statornuten eingelegt, verkeilt und einem ersten Imprägnier- und Härteprozess unterzogen. Dazu wird der gesamte Statorblechkörper mit verkeilter Wicklung bei Raumtemperatur in einem Tränkgefäss nach vorgängiger Evakuierung mit Tränkharz überflutet und anschliessend in einem Härteofen auf eine erste Temperatur aufgeheizt und dabei das Tränkharz komplett ausgehärtet. Diese Anfangstemperatur hängt ab von der Klassentemperatur des Isoliersystems (Wärmebeständigkeitsklasse), und beträgt z.B. bei Klasse H ca. 180 °C, bei Klasse F ca. 155 °C.

Danach lässt man den Statorkörper etwa bis auf Raumtemperatur abkühlen. Der Statorkörper wird um 90° um seine Längsachse gedreht und erneut mit Tränkharz überflutet und dabei imprägniert und anschliessend ausserhalb des Harzbades ein zweites Mal bei ca. 20° niedrigerer Temperatur ausgehärtet.

Sollten sich durch den Abkühlungsprozess Spalten im Isoliersystem, vornehmlich zwischen Hauptisolation und Nutseitenwand, gebildet haben, so werden diese nunmehr mit Harz ausgefüllt.

Beim Wiederabkühlen auf Raumtemperatur ist die Neigung zur Spaltbildung drastisch geringer, weil von einem niedrigeren Temperaturniveau ausgegangen wird und ein Schwund der Isolierung nicht mehr erfolgen kann.

Im Bedarfsfall kann sich an diesem zweiten Imprägnier- und Härteprozess ein dritter oder gar vierter anschliessen, verbunden jeweils mit einer Statordrehung um jeweils 90°.

Wenngleich bei dem erfindungsgemässen Verfahren gegenüber dem üblichen Ganztränkverfahren zusätzliche Verfahrensschritte notwendig sind, so wird dies doch durch die daraus resultierenden Vorteile (homogenerer Aufbau, keine Spaltbildung und damit keine Vibrationen oder Funkenentladungen, was es erst erlaubt, das Ganztränkverfahren bis zu den höchsten Nennspannungen und Einheitsleistungen > 100 MVA einzusetzen, sowie sehr guter Wärmeübergang zwischen Leitern und Eisenpaket) mehr als ausgewogen.

Die Erfindung wurde vorstehend anhand einer aus Roebelstäben bestehenden Statorwicklung erläutert. Das Verfahren lässt sich jedoch ohne Modifikationen auf andere Statorwicklungstypen und selbstverständlich auch auf Rotorwicklungen anwenden.

**Patentansprüche**

1. Verfahren zur Herstellung der Wicklung, insbesondere der Statorwicklung, einer elektrischen Maschine im Ganztränkverfahren, bei dem die aus mehreren, voneinander isolierten Teilleitern (6) bestehenden Leiterstäbe mit einer Hauptisolation (7) versehen, in die Maschine eingebaut, als Ganzes mit Tränkharz imprägniert und durch Wärmebehandlung das Tränkharz ausgehärtet werden, dadurch gekennzeichnet, dass mindestens zwei vollständige Imprägnier- und Aushärteprozesse bei horizontaler Maschinenachse aufeinanderfolgend durchgeführt werden, wobei der erste Aushärtungsprozess etwa bei Klassentemperatur des Isoliersystems und jeder weiterer bei tieferer Temperatur erfolgt, und dass vor jedem weiteren Prozess der Stator um mindestens 90°, höchstens jedoch um 180° um seine Längsachse gedreht wird.

2. Verfahren nach Anspruch 1, dadurch gekennzeichnet, dass die Aushärtetemperatur um jeweils 20 bis 30 °C reduziert wird.

**Claims**

1. Process for production of the winding, in particular the stator winding, of an electrical machine in the total-immersion impregnation process, in which the conductor rods, consisting of several, mutually insulated conductor elements (6) and provided with a main insulation (7) are installed into the machine, impregnated as a whole with impregnating resin and the impregnating resin is cured by heat treatment, characterized in that at least two complete impregnation and curing processes are carried out successively with horizontal machine axis, the first curing process being performed approximately at class temperature of the insulation system and each further process at lower temperature, and in that the stator is turned through at least 90°, but not more than through 180°, about its longitudinal axis before each further process.

2. Process according to Claim 1, characterized in that the curing temperature is reduced by 20 to 30°C in each case.

**Revendications**

1. Procédé de fabrication de l'enroulement, en particulier de l'enroulement de stator, d'une machine électrique par un procédé à immersion totale, suivant lequel les barres conductrices constituées de plusieurs conducteurs partiels (6) mutuellement isolés sont pourvues d'une isolation principale (7), sont montées dans la machine, sont imprégnées dans leur ensemble au moyen d'une résine d'imprégnation et sont durcies par un traitement thermique de la résine d'imprégnation, caractérisé en ce qu'au moins deux processus complets d'imprégnation et de durcissement sont effectués en succession avec l'axe de la machine horizontal, le premier processus de durcissement étant effectué approximativement à la température de la classe du système isolant et chaque processus suivant étant effectué à une température plus basse et qu'avant chaque nouveau processus, le stator est tourné d'au moins 90°, mais au maximum de 180°, autour de son axe longitudinal.

2. Procédé suivant la revendication 1, caractérisé en ce que la température de durcissement est chaque fois abaissée de 20 à 30°C.